(19) **Europäisches Patentamt**

**European Patent Office**

**Office européen des brevets**

(11) **EP 0 878 970 A2**

(12) **EUROPEAN PATENT APPLICATION**

(43) Date of publication:
18.11.1998 Bulletin 1998/47

(51) Int. Cl.⁶: $H04N\ 17/00$

(21) Application number: 98108250.6

(22) Date of filing: 06.05.1998

(84) Designated Contracting States:
AT BE CH CY DE DK ES FI FR GB GR IE IT LI LU
MC NL PT SE
Designated Extension States:
AL LT LV MK RO SI

(30) Priority: 16.05.1997 US 857912

(71) Applicant:
Matsushita Electric Industrial Co., Ltd.
Kadoma-shi, Osaka 571-8501 (JP)

(72) Inventors:
• Dischert, Lee
Burlington, NJ 08004 (US)
• Leacock, Thomas J.
Medford, NJ 08055 (US)
• Topper, Robert T.
Hatboro, PA 19040 (US)

(74) Representative:
Schwabe - Sandmair - Marx
Stuntzstrasse 16
81677 München (DE)

(54) **Imager registration error and chromatic aberration measurement system for a video camera**

(57) A system for detecting and measuring registration errors and chromatic aberration in color images derived from a color video camera includes an edge locator which finds edges in respective zones of the color images and stores sets of samples representing picture elements of each of at least two component color signals. A microprocessor processes the stored sample sets to identify a coarse displacement between corresponding samples of the two component color signals. The microprocessor then determines a fine displacement between the two color signals. The coarse displacement may be determined by performing a cross correlation on the two sample sets or by calculating respective sums of absolute difference between the two sample sets for different displacements between corresponding samples of the two samples sets. The fine displacement may be determined by interpolating samples interstitial to the samples of the first sample set surrounding the sample which is closest to the identified edge and interpolated samples interstitial to the samples of the second samples set which are displaced from the first set of samples by the coarse displacement and then performing a cross correlation on the resulting original and interstitial samples. The fine displacement may also be determined by fitting a parabolic curve to either the cross correlation values of the original sample values or to the calculated sum of absolute difference values for the two sample sets. The fine displacement, is added to or subtracted from the coarse displacement to obtain a measure of the registration error and/or chromatic aberration in the images to sub-pixel resolution.

FIG 1

**Description**

FIELD OF THE INVENTION

The present invention relates to color television cameras in general and specifically to a system for detecting and measuring chromatic aberration errors and linear registration errors in video images having live video content.

BACKGROUND OF THE INVENTION

In a video camera system, light from a scene is imaged through the lens system and separated by prisms into three components, representing the red, green and blue light content of the scene, respectively. Typically these imagers are aligned carefully in the manufacturing process.

Even if the imagers are perfectly aligned, however, chromatic aberration through the lens system may cause the different color components of the image to appear misaligned. Chromatic aberration occurs in lenses because light at different frequencies travels at different velocities through the lens system. Chromatic aberration is especially noticeable near the edges of the image.

Registration of camera imagers has traditionally been accomplished by adding linear combinations of predetermined waveforms to best approximate the registration error of the camera. The weighting coefficients for these waveforms are typically entered by a technician who adds varying amounts of different waveforms while the camera is aimed at a test chart. These waveforms are used to modify the deflection signals applied to the imaging device to bring the signals provided by the various devices into alignment.

This manual approach and many automatic approaches typically require the use of calibration charts to construct the test data set used for on air correction. Automatic registration systems have been developed which automatically converge on an optimal set of adjustments while the camera is aimed at the test chart. These systems typically develop a correction waveform for each image pick up device by capturing images of the test chart from each pickup device and comparing the phase or time displacement of the resultant video waveforms with those produced by the other image pickup devices.

These adjustments are typically performed as a part of the normal camera set-up procedure prior to going on air. Over a period of time, however, registration can change because of changes in temperature or voltage or because of drift in the electrical circuits and the camera must be taken off air to readjust the registration.

If zoom, focus and iris adjustments are taken into account, as they must be for lens chromatic aberration correction, an extremely tedious and time consuming set up procedure may be needed to build the registration data set or all possible combinations of lens settings.

Another approach, which uses on air measurement, divides the raster into many zones and then stores in memory the errors for each of the zones as they are detected. The correction waveforms are updated as data becomes available. While this method solves the problem of setting up the camera, it requires a relatively large memory to store all of the errors for each of the zones for all of the various zoom focus and iris adjustments. An automatic registration correction system of this type is described in U.S. Patent No. 4,500,916, entitled "Automatic On-Air Registration System and Method for Color T.V. Camera," which is hereby incorporated by reference for its teaching on automatic correction of registration errors.

SUMMARY OF THE INVENTION

The present invention is embodied in error measurement apparatus for a system which automatically corrects registration and chromatic aberration errors in a color video camera. The error measurement system includes two components. A pre-processor, which analyzes the video images as they are received and locates likely edges in these images and a microprocessor which performs more detailed testing of the sets of samples to determine the magnitude of any registration errors. The preprocessor identifies likely edges in the received image and causes picture elements (pixels) surrounding likely edges to be stored in a memory. The pixels stored in the memory are identified by zones (e.g. 32 horizontal zones by 8 vertical zones). The stored video samples are passed to a microprocessor which performs more detailed testing of the samples and determines which sets of samples represent edge errors and the magnitude of the error for each set of samples. The information collected by the microprocessor is used by other circuits to generate correction waveforms for the registration and chromatic aberration errors.

These correction waveforms are used to calculate interpolation coefficients that are stored for the various lens conditions (i.e. zoom, focus, aperture). When the camera is producing live video images, the coefficients are downloaded to an interpolation circuit which moves offset edges together, reducing the magnitude of the errors. In addition, the microprocessor keeps statistical information on the samples representing misaligned edges in the various zones of the pictures and identifies any areas of the picture in each different lens condition for which more samples should be taken to obtain an accurate error measurement. The system is designed to work in real time, while the camera is operating. It gathers new measurement information as the camera is used to produce video images.

BRIEF DESCRIPTION OF THE DRAWINGS

Figure 1 is a block diagram of an image registration and chromatic error correction system which includes an embodiment of the present invention.

Figure 2 is a block diagram of the edge measurement system shown in Figure 1.

Figure 3 is a block diagram partly in logic diagram form of an edge locator suitable for use in the edge measurement system shown in Figure 2.

Figure 3A is a block diagram of a maximum edge processor suitable for use in the edge locator shown in Figure 3.

Figure 4 is a block diagram of a memory controller suitable for use in the edge measurement system shown in Figures 1 and 2.

Figure 5 is an image diagram which illustrates the location of the zones used by the exemplary registration error measurement system.

Figure 6 is a memory structure diagram which shows how information is stored for edges detected in the image.

Figure 7 is a flow chart diagram which illustrates operations performed by the microprocessor shown in Figures 1 and 2.

Figure 8 is a data structure diagram which is useful for describing the process shown in Figure 7.

DETAILED DESCRIPTION

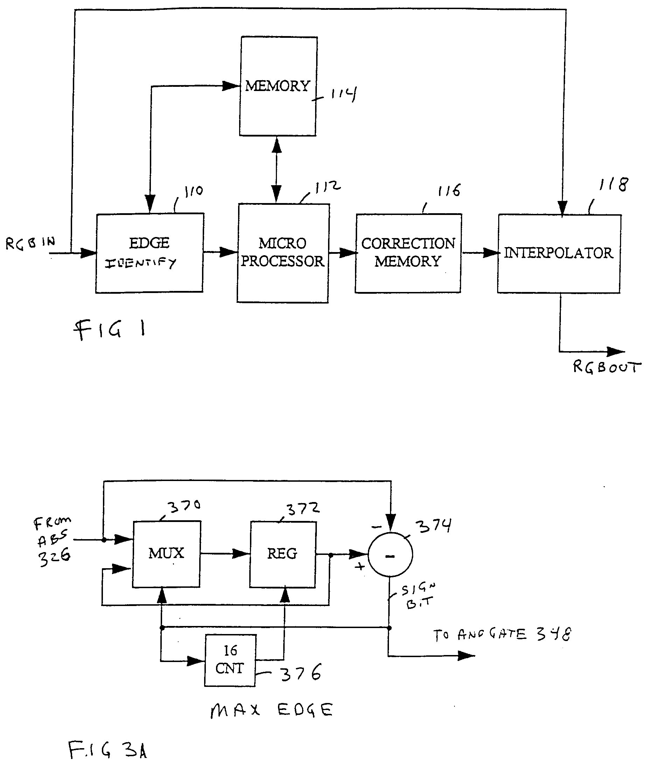

An exemplary edge measurement and processing system is shown in Figure 1. Red, green and blue video signals (RGBIN) are provided by a video camera to edge identification processor 110 and to an interpolator 118. The exemplary edge identification processor 110 scans the entire image for edge information. When an edge is identified, sample representing pixels surrounding the edge in the horizontal direction are provided to a memory 114. A microprocessor 112 analyzes the stored samples and identifies those sets of samples which may correspond to misaligned vertical edges (horizontal transitions) in the red, green, and blue video signals. Using these identified edges, the microprocessor 112 generates correction waveforms and stores coefficients representing these waveforms in a correction memory 116. The interpolator 118 extracts the correction waveform coefficients from the memory 116 and applies correction waveforms to the red and blue color signals to align them with the green color signal. The output signals, RGBOUT, provided by the exemplary interpolator 118 are horizontally registered red, green, and blue color signals.

The exemplary edge measurement system locates edges in the image representing horizontal transitions in the video signal in two steps. In the first step, the edge identification processor 110 scans the image to locate horizontal signal transitions which are not associated with vertical transitions or diagonal transitions. The exemplary embodiment of the invention described below processes only horizontal transitions. If vertical transitions (i.e. horizontal edges) exhibit misregistration or chromatic aberration errors, the signals may be corrected in the vertical direction as well by applying the output signal provided by interpolator 118 to a transposed memory and duplicating the system shown in Figure 1 with modifications to accommodate the vertical to horizontal aspect ratio of the image (i.e. fewer horizontal zones and more vertical zones for the transposed image). The exemplary system described below processes only horizontal video signal transitions (vertical edges in the image). Errors in these transitions are more noticeable than errors in vertical signal transitions (horizontal edges in the image) because of the greater horizontal span of a 16 by 9 video image.

The edge identification processor 110 does not store edge information for each horizontal signal transition in the image. The video image is divided into 256 zones with 32 zones horizontally and 8 zones vertically. The edge identification processor 110 monitors a tally of these zones and the edge information which has been obtained. In steady state operation, edge information is stored only for those zones which are indicated by the tally memory (not shown in Figure 1) to have insufficient edge information. The tally memory is maintained by the microprocessor 112 based on valid sample sets received from the edge identification processor 110.

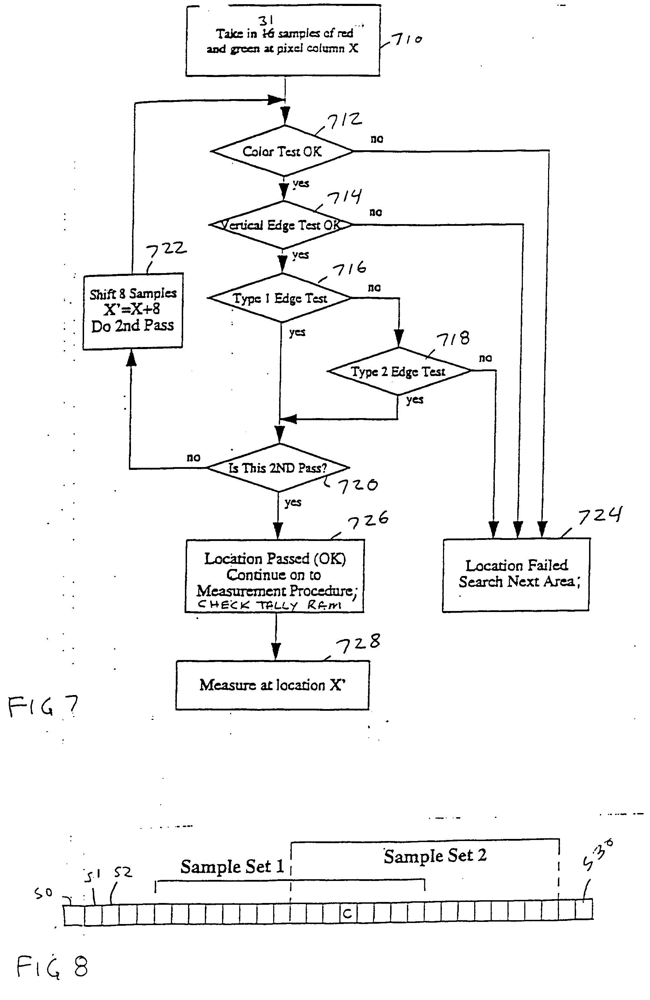

Once the sets of pixels representing the detected edges in the image have been stored into the memory 114, the microprocessor 112 may process these sample sets, as described below with reference to Figure 7, to identify those sets which correspond to the misaligned transitions and to determine a correction which should be applied to the red and blue video signals in order to align them with the green video signal. Once the edges have been identified and measured, the red and blue color signals may be corrected using apparatus and method disclosed in copending Patent Application No. 08/807,584, entitled "REGISTRATION CORRECTION WAVEFORM DETERMINATION METHOD AND SYSTEM FOR A TELEVISION CAMERA", which is hereby incorporated by reference for its teaching on the correction of waveform misalignment and chromatic aberration distortion in a video camera.

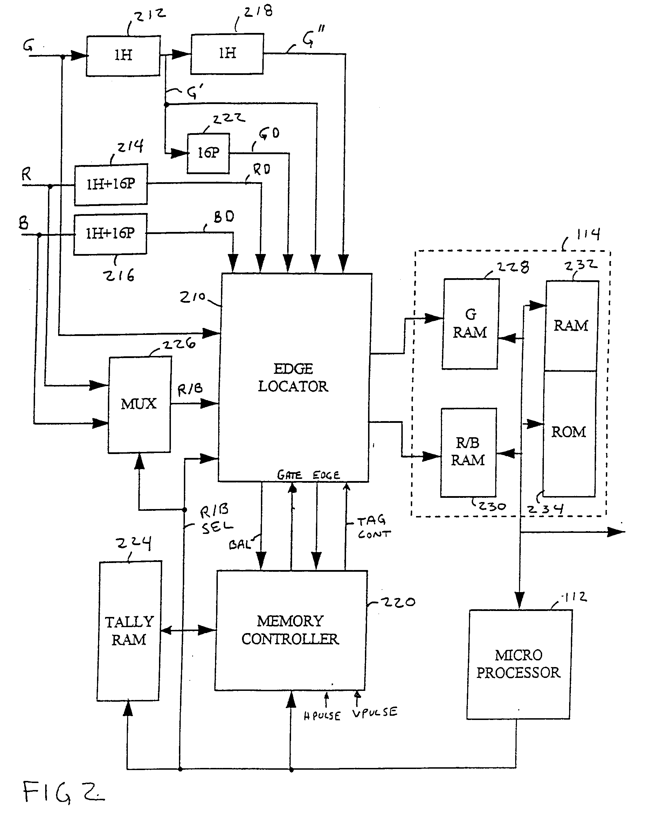

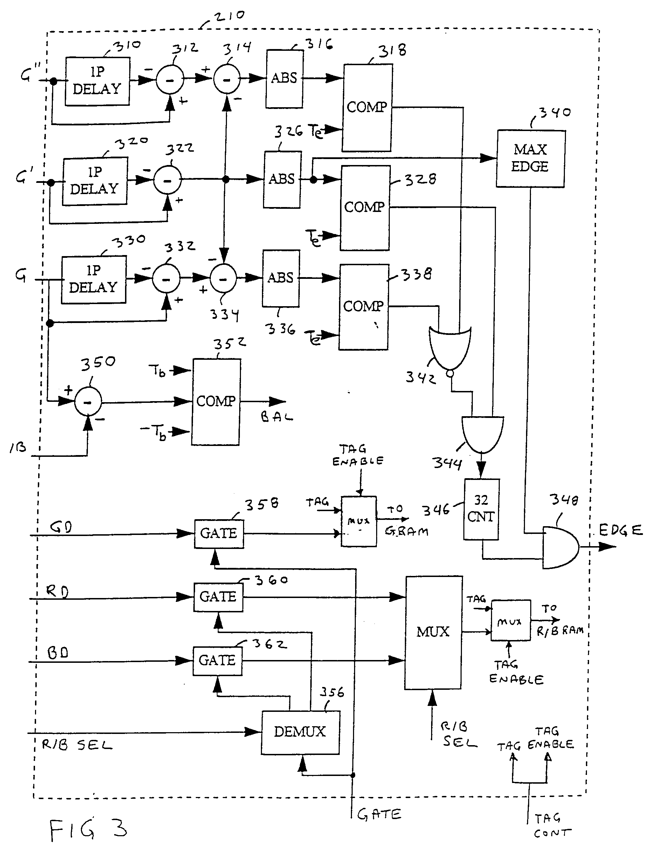

Figure 2 is a block diagram which shows details of the edge identification processor 110, microprocessor 112 and memory 114 shown in Figure 1. The edge identification processor 110 includes three major components: an edge locator 210, a memory controller 220, and a tally RAM 224. As shown in Figure 2, the red (R), green (G), and blue (B) video signals are applied to the edge locator delayed by one horizontal line period plus 16 pixel periods (16P). The G video signal is applied directly to the processor 110 while one of the R and B signals is applied by the multiplexer 226, directly to the processor 110, responsive to the R/B SEL signal. In addition, the G video signal is applied to a 1 horizontal line (1H) delayed element 212 to produce a delayed green video signal G' which in turn is applied to a 1H delay line 218 to produce a 2 line delayed green video signal G". The signals G, G' and G" are used, as described below with reference to Figure 3, to locate groups of samples which may correspond to horizontal signal transitions in the image. The green video signal is used, as is well known to those skilled in the art, because it includes the greatest amount of luminance information of any of the three color video signals, R, G, and B.

The G' video signal is delayed by a 16P delay element 222 to produce the delayed green video signal, GD. Corresponding red and blue delayed video signals are provided by 1H + 16P delay elements 214 and 216 respectively. These are the signals RD and BD.

As described below with reference to Figure 3, the edge locator 210 monitors the signals G, G' and G" to locate possible horizontal luminance transitions in the input video signal. The edge locator 210 also monitors the signals G, and R or B to determine if the identified edge information is in a white balanced portion of the image. Actually, the green signal is compared against either the red signal, R, or the blue signal, B, to generate a balance signal BAL. The signal BAL is a color balance signal which indicates that the G and B or R signals are at proper relative levels to obtain valid information on misaligned horizontal transitions in the image. Whether the signal BAL represents a red-green edge or a blue-green edge is determined by the signal R/B SEL which is generated by the microprocessor 112. This signal may be switched within a zone so that both red and blue edge information may be obtained for each zone of an image. It may also be switched in alternate zones or in alternate images.

The memory controller 220 receives the edge information and the balance signal from the edge locator 210. Memory controller 220 also receives a vertical pulse signal, VPULSE, and a horizontal pulse signal, HPULSE, from the scanning circuitry of the camera (not shown). The signal VPULSE is pulsed at the start of each field or frame and the signal HPULSE is pulsed at the start of each line of the scanned image. The memory controller 220 compares the edge and balance information to determine whether the edge is located in a balanced area of the image and thus may represent misaligned color signal components. If the controller 220 determines that an edge may provide information useful for aligning the image components, it calculates the zone in which the edge occurs using the signals HPULSE and VPULSE. Memory controller 220 then compares the zone information with the information stored for that zone in the tally RAM 224. If the tally RAM 224 indicates that sufficient edge information for the calculated zone has already been stored, memory controller 220 ignores the edge information. If, however, tally RAM 224 indicates that more edge information is needed for the zone, memory controller 220 provides gating signals for the green, blue, or red color signal, as appropriate, causing 31 samples of the corresponding GD and RD or BD signals to be stored into the corresponding memory areas 228 and 230 of the memory 114.

As described below with reference to Figure 7, microprocessor 112 processes these stored pixel sets using a program stored in read only memory (ROM) 34 of the memory 114 and using a random access memory area 232 of the memory 114 to produce correction coefficients for the correction memory 116, shown in Figure 1 and to store coefficients and tally RAM images for the various lens conditions (e.g. zoom, focus and aperture settings).

Although the memories 228, 230, 232 and 234 are shown as components of a single memory 114, it is contemplated that these memories may be implemented separately or in different combinations.

When it processes the sample sets of the R, G and B video signals, the microprocessor 112 determines whether valid edge information has been stored for a particular sector. If this processing determines that the stored sample sets do not represent valid edge information, the microprocessor 112 ignores the information and does not change the state of the corresponding cell and the tally RAM 224. If, however, the microprocessor 112 determines that valid edge information exists in the sample set it increments a counter for the zone. When the microprocessor has processed a set number of valid sample sets (e.g. 16) it resets the bit in the tally RAM 224 corresponding to the zone so that no more samples sets are stored or analyzed for that zone as long as the lens condition is not changed.

While the exemplary embodiment of the invention stores and analyzes only a predetermined number of sample sets, it is contemplated that the system may operate to continually store sample sets for each zone by weighting the edge information obtained from newly acquired sample sets relative to the number of sample sets previously acquired for the zone, to track slowly occurring changes in the lens system and in image registration.

In the exemplary system, the tally RAM 224 contains a cell for each zone of the image. Separate tally RAM images and separate correction coefficient sets are maintained for the R and B signals for each lens condition of the camera. Used in this sense, lens condition means quantized focus, zoom and aperture setting. In the exemplary embodiment of the invention, approximately 1000 tally RAM images and 1000 respective coefficient sets are maintained. It is contemplated, however, that only tally RAM images and coefficient sets related to focus and zoom may be stored as the incremental errors resulting from different aperture settings are relatively small. It is also contemplated that the system may measure using only chromatic aberration errors from two colors, for example red and green, with error measurement and correction factors for the blue color signal being extrapolated from the correction factors applied to correct the chromatic aberration in the red color signal.

Figure 3 is a block diagram partly in logic diagram form of an edge locator suitable for use as the edge locator 210 shown in Figure 2. As shown in Figure 3, the G' signal, representing the green signal delayed by one line interval, is applied to a one pixel delay element 320 and to the minuend input port of a subtracter 322. The output signal of the one pixel delay element 320 is applied to the subtrahend input port of the subtracter 322. The combination of the delay element 320 and subtracter 322 forms a running difference of successive pixels in the G' video signal. These differences are applied to an absolute value circuit 326 which converts the negative valued samples to positive valued samples. The output signal of the circuit 326 is applied to one input port of a comparator 328, the other input port of which is coupled to receive a threshold value Te. The threshold Te distinguishes horizontal transitions from noise components of the difference signal. The comparator 328 produces a logic-high value if the signal provided by the absolute value circuit 326 is greater than the threshold value Te and produces a logic-low signal otherwise. Thus the comparator 328 produces a logic-high output signal whenever a significant level transition exists between successive samples of the G' video signal.

The G video signal is applied a 1P delay element 330 and to a subtracter 332 in the same way as the G' signal. The output signal provided by the subtracter 322 represents a running pixel difference of the G signal. This signal is applied to the minuend input port of the subtracter 334, the subtrahend input port of which is coupled to receive the output signal of the subtracter 322. In the same way, the G" video signal is applied to a 1P delay element 310 and subtracter 312, the output signal of which is applied to the minuend input port of a subtracter 314. The subtrahend input port of the subtracter 314 is also coupled to receive the output signal of the subtracter 322.

If the image being processed includes only a vertical edge (a horizontal transition), then the output signals of the subtracters 312, 322, and 332 should be approximately equal, as the vertical edge will extend across all three lines of the image. In this instance, the output signals provided by the subtracters 314 and 334 are approximately zero. If, however, the transition is not a pure horizontal transition and includes some vertical components then the output signal of the subtracter 314 or 334 will be significantly greater than zero. The output signal of subtracter 314 is applied to absolute value circuit 316, which converts negative values to positive values and applies the output signal to comparator 318. Comparator 318 compares the signal against threshold Te and provides a logic-high output signal when the signal provided by the absolute value circuit 316 is greater than threshold Te and provides a logic-low output signal otherwise. In the same way, the output signal of the subtracter 334 is processed by the absolute value circuit 336 and comparator 338 to produce a logic-high output signal when the signal provided by the circuit 336 is greater than the threshold Te and to provide a logic-low output signal otherwise.

The signals provided by the comparators 318 and 338 are applied to a NOR gate 342 the output signal of which is coupled to one input terminal of an AND gate 344. The other input terminal of the AND gate 344 is coupled to receive the signal provided by the comparator 328.

The output signal of the comparator 328 is the edge signal of the video information that is currently being processed. If this edge signal represents a pure horizontal transition, then the output signals of the comparators 318 and 338 are logic-low signals. In this instance, the output signal of the NOR gate 342 is logic-high allowing the transition signal provided by the comparator 328 to propagate through the AND gate 344. The output signal of the AND gate 344 is applied to a digital one-shot circuit 346, which produces a logic-high pulse having a period of 32 pixel periods, in response to the detected edge. This signal is applied to one input terminal of an AND gate 348. If, however, the output signal of the NOR gate is logic-low, indicating that at least one of the G and G" signals indicates the presence of a vertical or diagonal transition, then the output signal of AND gate 344 remains logic-low and no edge information is passed by the AND gate 348.

The output signal of the absolute value circuit 326 is also applied to a maximum edge detector 340. As described below with reference to Figure 3a, the maximum edge detector circuit 340 determines whether an edge detected by the absolute value circuit 326 is the largest edge in a 16 pixel window. The output signal of the maximum edge detector 340 is applied to the other input port of the AND gate 348. The output signal of the AND gate 348 is an indication that a horizontal transition has been located in the G' signal. This output signal, EDGE, is applied to the memory controller 220 as described above with reference to Figure 2.

Also as described above, the edge locator circuitry shown in Figure 3 determines a balance signal, BAL. The balance signal is determined by subtracting either the red signal, R, or the blue signal, B, from the green signal, G, in the subtracter 350. The signal which is subtracted from the G signal is determined by the signal R/B SEL which is applied to the multiplexer 226 as shown in Figure 2. This signal is provided by the microprocessor 112 based on the tally RAM image that is currently loaded.

The output signal of the subtracter 350 is a measure of the difference between the video signals. This difference is applied to a comparator 352 which produces a logic-high output signal if the difference is greater than a negative threshold -Tb and less than a positive threshold Tb. The output signal of the comparator 352 is the balance signal BAL.

The edge locator 210 also includes gating circuitry which gates the delayed green, red, and blue signals, GD, RD, BD, respectively, for writing into the G RAM 228 and R/B RAM 230, shown in Figure 2. The signals GD, RD and BD are applied to respective gating circuits 358, 360, and 362. These circuits are responsive to gating signals provided by the memory controller 220 to apply the signals to the respective memory areas. The signals GD, RD, and BD are delayed by 16 pixels relative to the G' signal so that the pixel values stored into the memory include sample values preceding the detected transition as well as sample values following the transition. As described above, samples of the signals GD and RD or BD are stored only when the signal BAL indicates that the video signals are color balanced.

Figure 3A is a block diagram of the maximum edge detector 340, shown in Figure 3. In Figure 3A, the detected edge information from absolute value circuit 326 is applied to one input port of a multiplexer 370 and to the subtrahend input port of a subtracter 374. The output signal of the multiplexer 370 is applied to the input port of a register 372, the output port of which is coupled to the minuend input port of the subtracter 374. The output port of the register 372 is also coupled to the second input port of the multiplexer 370. The sign-bit of the output signal of subtracter 374 is coupled to the control input terminal of the multiplexer 370. When the sign bit is logic-high, indicating that the output value provided by the subtracter 374 is negative, the multiplexer 370 is conditioned to pass the value provided by absolute value circuit 326 to the register 372. Otherwise, the multiplexer is conditioned to pass the output value of the register 372 back to the input port of register 372.

The output value of the subtracter 374 is negative when the input sample from the absolute value circuit 326 (shown in Figure 3) is greater than the value stored in the register 372. When this occurs, the sign bit of the output signal of the subtracter 374 becomes logic-high, causing the input value from the absolute value circuit 326 to be stored into the register 372. Register 372 is enabled to store data values by a 16 pixel period wide pulse provided by a digital one-shot 376. The digital one-shot 376 is triggered by the sign bit of the output signal of the subtracter 374. At the end of the 16 sample period, the output signal of the digital one-shot 376 becomes logic-low, resetting the register 372. Thus, the last transition of the signal provided by the subtracter 374 to the AND gate 348 during the 16-pulse interval represents the largest transition that was detected in the 16-sample period.

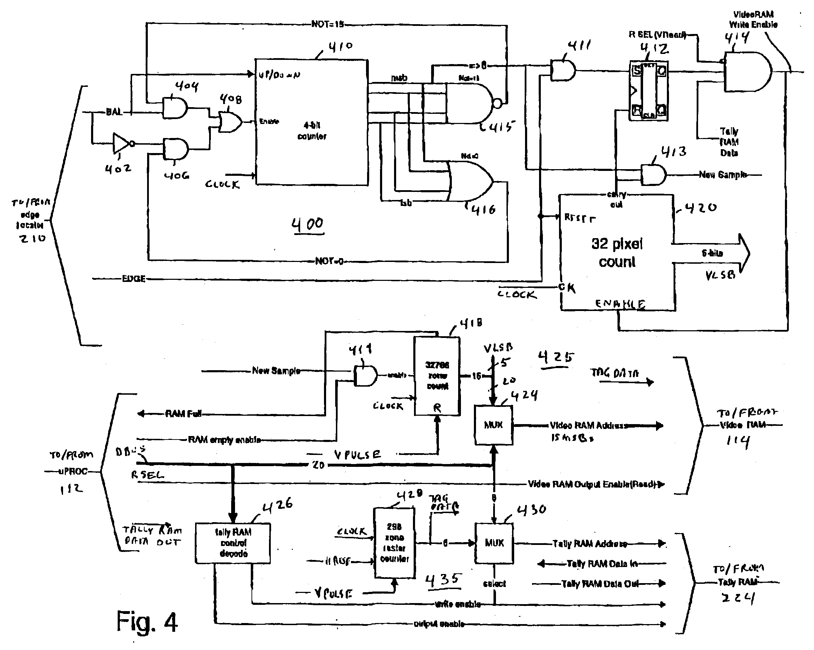

Figure 4 is a block diagram of a memory controller suitable for use in the edge identification processor shown in Figures 1 and 2. The controller includes a color balance circuit 400, a video RAM address generator 425 and a tally RAM address generator 435. In Figure 4, the signal BAL from the edge locator 210 (shown in Figure 2) is applied to an UP/DOWN terminal of a four-bit color balance counter 410, to an input terminal of a first AND gate 404 and, through an inverter 402 to a first input terminal of a second AND gate 406. The output signals provided by the AND gates 404 and 406 are applied to an OR gate 408 which provides an enable signal for a four-bit color balance counter 410. The four-bit output signal of the counter 410 is applied to a NAND gate 415 and to an OR gate 416. The NAND gate 415 provides a logic-high output signal when the counter value is not 15, and the OR gate 416 provides a logic-high output signal when the counter value is not zero. The output signal of the NAND gate 415 is coupled to a second input terminal of the AND gate 404 and the output signal of the OR gate 416 is applied to a second input terminal of the AND gate 406. The most significant bit (MSB) of the output signal of counter 410 is the output signal of the color balance circuit and is applied to an AND gate 411.

The counter 410 also receives a signal CLOCK having a period equal to one pixel time. Counter 410 continually counts pixel values which are color balanced, as indicated by the signal BAL. If the pixel is balanced, the counter increments its value and if it is not balanced, the counter decrements its value. Thus, the output signal of the color balance circuit, the MSB of the count value, indicates whether eight of the last 16 samples were balanced. If so, then the output signal is logic-high; if not, the output signal is logic-low. The combination of the AND gates 404 and 406 and the OR gate 408 ensures that the counter is enabled when BAL is logic-high as long as the counter value is not 15 and is enabled when BAL is logic-low, as long as the counter value is not zero. This circuitry prevents the counter from overflowing or underflowing. The counter is monitoring all pixel values so that when an edge is detected, it can be immediately determined whether the pixel values preceding the edge were color balanced.

The signal EDGE is applied to a second input terminal of the AND gate 411 and to the reset input terminal of a 32 pixel counter 420. The output signal of the AND gate 411 is applied to the set input terminal, S, of the flip flop 412 and the carry out signal of the 32 pixel counter 420 is applied to the reset input terminal of the flip-flop 412. Thus the flip-flop 412 is set when an edge is detected and reset when the counter 420 has counted 32 samples following that edge. The output signal of the flip flop 412, an inverted signal R SEL, and the output data provided by the tally RAM 224, shown in Figure 2, are applied to respective input terminals of an AND gate 414. The output signal of this AND gate is the video RAM write enable signal. This signal is also applied to an enable input terminal of the 32 pixel counter 420. The counter 420 is coupled to count pulses of the signal CLOCK when it is enabled. When the counter 420 reaches a value of 32, the carry out signal resets the flip-flop. The carry out signal is also applied to an AND gate 413 along with the output signal of the color balance circuitry. If the output signal of the balance counter is logic-high, then, when the carry out signal is pulsed, the AND gate 413 generates a signal NEW SAMPLE, indicating that a new set of samples has been written into the video RAMs 228 and 230 (shown in Figure 2). the signal NEW SAMPLE, increments the more significant bits of the address value applied to the video RAMs, so that the next sample set stored in a new location.

Because the signal NEW SAMPLE is a logical AND of the output signal of the color balance circuitry 400 and the carry out signal of the counter 420, NEW SAMPLE is logic-low at the end of a sample set if the final 16 samples of the set do not include at least 8 color balanced samples.

One output signal of the 32 pixel counter 420 is a 5-bit value which forms the 5 least significant bits (LSBs) of the video RAM address. The combination of the 32 pixel counter 420 and the 32768 zone counter 418 form the video RAM address generator 425. The signal NEW SAMPLE, provided by the AND gate 413 is applied to one input terminal of an AND gate 419, the other input terminal of which is coupled to receive a RAM EMPTY signal provided by microprocessor 112. The output signal of the AND gate 419 enables the counter 418 to increment its value by one. The output value of the zone counter 418 forms the 15 MSBs of the video RAM address. Counter 418 is reset by the signal V PULSE, which occurs prior to each frame or field of data provided by the video camera.

The 20-bit address values provided by the counters 418 and 420 are applied to one input port of the multiplexer 424. The other input port of the multiplexer 424 receives 20-bit address values from the microprocessor 112 via the microprocessor data bus DBUS. Multiplexer 424 is controlled by the read select signal, R SEL. When this signal is asserted the 20-bit address values provided by the microprocessor are applied to the video RAM address input port allowing the addressed sample set stored in the video RAM to be read by the microprocessor 112. When the signal R SEL is not asserted, the 20-bit address values provided by the counters 418 and 420 are applied to the video RAM so that a new sample set can be written into the video RAM. In the exemplary embodiment of the invention, these address values are applied both to the G RAM 228 and to the R/B RAM 230.

The microprocessor data bus, DBUS, is also coupled to the tally RAM control decode circuit 426 which generates the write enable and output enable signals for the tally RAM 224, shown in Figure 2. The address signal for the tally RAM is generated by a 256 zone counter 428 which is clocked by the signal CLOCK and also is coupled to receive the signals H-PULSE and V-PULSE. Counter 428 is actually two counters (not shown). The first counter counts pulses of the signal CLOCK occurring in a horizontal line interval and toggles the value of a horizontal zone counter as the boundaries between horizontal zones are crossed by the scanned video signal. This counter is reset by the signal H-pulse and provides an output pulse when NHZ pixels (e.g. 60) have been processed, NHZ being the number of pixels in a horizontal zone such that NHZ times 32 is the number of active pixels in a horizontal line. The value of the horizontal zone counter forms the five least significant bits (LSBs) of the tally RAM address value.

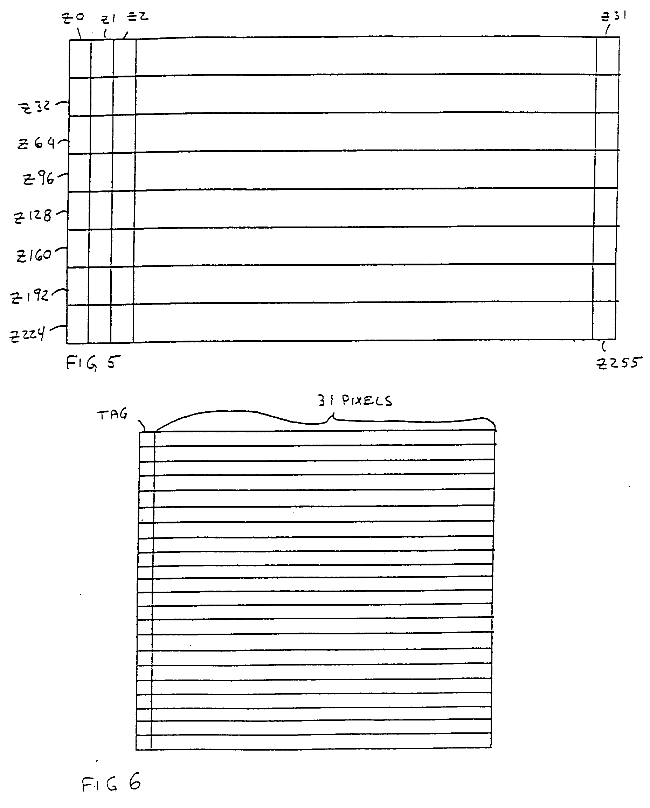

The zone counter 428 includes a second counter which is incremented by the signal H-pulse and reset by the signal V-pulse. This counter counts lines in a zone and generates a toggle pulse for the vertical zone count value when a number, NVZ (e.g. 144), of H-pulse signals have been received. The vertical zone count value forms the three MSBs of the tally RAM address value. Thus, the output signal of the counter 428 is the zone number - and the zone address in the tally RAM - of the pixel data currently being provided in the input image. This value is also provided as the TAG value to the video RAM. As described below with reference to Figure 6, the TAG value is stored in the first byte of each sample set to identify the zone to which the sample set corresponds.

Figure 5 is a diagram of a video image which illustrates how the zones of the image are arranged. The first zone, zone 0, is in the upper left corner of the image the zones increment by one across the image until zone 31. Zone 32 is immediately below zone 0. Zone 255 is in the lower right hand corner of the image. The tally RAM contains one bit for each zone which indicates whether more data is needed for that zone (logic-high) or sufficient data has been collected to obtain accurate edge displacement information (logic-low). As described below with reference to Figure 7, the tally RAM is loaded by the microprocessor 112 which contains tally RAM images for each lens condition for each of the two color signals R and B.

As shown in Figure 4, the address value provided by the counter 428 is applied to one input port of a multiplexer 430 the other input port of which is coupled to receive 8 bits from the microprocessor bus, DBUS. The multiplexer 430 is controlled by a select signal which is the write enable signal for the tally RAM 224, generated by the decode circuitry 426. When this signal is asserted the microprocessor is accessing the tally RAM address value provided on its data bus in order to change the data in the cell corresponding to the tally RAM address (zone number). Responsive to this signal the TALLY RAM DATA OUT signal provided by the microprocessor 112 is written into the addressed tally RAM cell. When the select line is not asserted, the address provided by the counter 428 is passed to the tally RAM address input port and the signal TALLY RAM DATA IN is provided from the tally RAM to the memory controller 220.

In operation, when an edge is detected by the edge locator 210, the signal EDGE becomes logic-high, resetting the 32 pixel counter 420 and setting the flip-flop 412 if at least eight of the previous 16 pixel values were color balanced. If the microprocessor is not reading data from the video RAM and if the tally RAM entry for the zone that is currently being scanned is logic-high then the video RAM write enable signal is asserted and the counter 420 is enabled to generate address values so that the current sample set may be stored into the video RAMs 228 and 230. When the counter 420 is reset, the five LSBs of the video RAM address value are zero and the 15 MSBs are the value provided by the counter 418. As described above, the value provided by counter 418 is incremented each time the counter 420 counts to 32 and the balance counter 410 indicates that at least eight of the 16 samples following the edge were color balanced. If these final samples were not properly balanced the counter is not incremented and the next sample set overwrites any samples of the current sample set that may have been stored into the video RAM.

The counter 420 counts from 0 to 31 responsive to pulses of the signal CLOCK. The combined address value provided by the counters 418 and 420 is applied to the video RAM address port via the multiplexer 424. When the output value of counter 420 is 0, both of the video RAMs G RAM 228 and R/B RAM 230 write the TAG DATA into the memory cell. When the counter value is greater than zero, G RAM 228 stores successive samples of the delayed green video signal, GD, and R/B RAM stores successive samples of either the delayed red video signal, RD, or the delayed blue video signal, BD, as determined by the signal R/B SEL.

If no vertical edge greater m magnitude than the first edge is detected in the 16 pixels following the pulse of the signal EDGE, then 31 pixels are stored in each of the video RAMs 228 and 230, 15 on either side of the pixel position at which the edge was detected and the pixel corresponding to the detected edge.

If a greater vertical edge is detected in the 16 pixels following the first EDGE pulse, then the signal EDGE resets the counter 420, causing the stored sample set to be centered about the larger magnitude edge.

Figure 6 shows how the sample sets are stored in the video RAMs 228 and 230. Each of the video RAMs is modeled as a data structure having 32,768 32 byte records. Each record has two field, a tag field and a data field. The tag field contains the zone number of the 31 samples in the data field.

Although the materials above describe signal processing circuitry which detects vertical edges in an image and stores sample sets corresponding to those images in the video RAM, it is contemplated that these edges may be detected by the microprocessor 112 which processes the image pixels directly. As described above, the microprocessor 112 also evaluates the pixel data sets corresponding to the detected edges to determine if they contain data that can be used to measure misregistration of the various color images resulting either from horizontal imager misalignment or lateral chromatic aberration (LCA) in the optical system.

Figure 7 is a flow-chart diagram which illustrates the operation of the microprocessor 112. For the sake of simplicity, the materials below describe the process performed by the microprocessor 112 in terms of the R and G color signals. The same process is also implemented for the B and G color signals. In the exemplary process, the microprocessor 112 locates sample sets corresponding to the vertical edges in the image, tests these sample sets for validity in representing edge registration errors and measures any edge errors. Steps 710, 712 and 714 perform operations which are equivalent to those performed by the edge identifier processor 110, described above with reference to Figures 1 through 6. For steps 710, 712 and 714, it is assumed that the microprocessor 112 is processing a stored image, held in a field or frame store memory (not shown).

In the first step in the process illustrated by Figure 7, step 710, the microprocessor 112 retrieves 31 consecutive samples of each of the R and G color signals of the stored image. The numbers of samples used is exemplary, it is contemplated that other numbers of samples may be used without affecting the operation of the invention. The process operates on the retrieved samples in two passes. As shown in Figure 8, the first pass uses 16 samples starting at sample number 5. In the second pass, the starting sample becomes sample number 13. Both sample sets contain the center pixel (c) which should correspond to the center of the horizontal transition.

At step 712, the microprocessor determines if the retrieved pixels of the R and G color signals are sufficiently color balanced to provide valid edge information. To check for this condition, the microprocessor 112 calculates the mean and variance of each color signal over the 16 samples as shown in equations (1) and (2) for the signal R.

$$\text{Mean}_{red} = \frac{\sum\limits_{i=0}^{15} R(x + i)}{16} \tag{1}$$

$$\text{Var}_{red} = \frac{\sum\limits_{i=0}^{15} (R(x + i) - \text{Mean}_{red})^2}{16} \tag{2}$$

In the above equations, on the first pass, x = 5 and on the second pass, x = 13.

The magnitude of the difference of the means of the two colors (e.g. R and G) are then compared to a color mean threshold setting ($TH_{CM}$) as shown in inequality (3).

$$| \text{Mean}_{green} - \text{Mean}_{red} | < TH_{CM} \tag{3}$$

Next, the magnitude of the difference of the variances of each color sample set is compare to a color variance threshold setting ($TH_{CV}$) as shown in inequality (4).

$$| \text{Var}_{green} - \text{Var}_{red} | < \text{TH}_{CV} \tag{4}$$

If the color signal sample sets pass both of these tests, then they are considered to be close enough to representing a luminance signal to provide meaningful edge information.

As described above, when measuring registration errors or LCA, it is important that the sample does not contain vertical or diagonal edges. These edges may contain vertical registration errors or vertical chromatic aberration (VCA) which may be erroneously interpreted as horizontal registration errors or LCA. To prevent vertical registration errors or VCA from affecting the horizontal measurements, the exemplary process shown in Figure 7, as step 714, performs a vertical edge test. For this test, the microprocessor 112 retrieves 16 samples each from the lines directly above and directly below the line from which the sample set was retrieved at step 710. At step 714, the microprocessor 112 calculates the largest vertical transition, VMAX, occurring in the three lines, as shown in equation (5), and the largest horizontal transition occurring in the current line, as shown in equation (6), and determines whether the relative magnitude of the largest horizontal transition is greater than a threshold, $\text{TH}_{HV}$ according to inequality (7).

$$VMAX = MAXIMUM \{|X([r,i]) - X([r+1,i])|\}|_{r=-1}^{0} \tag{5}$$

$$HMAX = MAXIMUM\{|X([r,i]) - X([r,i+1])|\}|_{i=0}^{15} \tag{6}$$

$$\frac{HMAX}{HMAX + VMAX} > \text{TH}_{HV} \tag{7}$$

If the sample set obtained at step 710 passes the color test in step 712 and the vertical edge test in step 714 then it may contain the information needed to measure horizontal registration error and LCA. The samples which pass these two tests are equivalent to the samples which are stored into the video RAMs 228 and 230 as described above with reference to Figures 1 through 6.

In the exemplary embodiment of the invention, tests to determine if a sample set is valid for edge measurement are performed at step 716 and 718. There are two classifications defined which determine if a set of samples can be used as a valid edge for measurement of misregistered or LCA edges. The classifications are arbitrarily defined as Type 1 and Type 2. If a sample of pixels can be classified as one of these types, then a valid measurement can be made at the location. The inventors have determined that these types of sample sets give valid error measurements in a variety of different image scenes and test patterns. The statistics defined below are calculated for the reference color (e.g. green) sample of N pixels. In the exemplary embodiment of the invention, N = 16. These statistics are used to determine if the sample region can be classified as containing one of the two types of edges.

1. NumTransitions - This is a count of the number of slope polarity changes in the sample data over N pixels. A slope polarity change is defined as a polarity change in the difference between adjacent pixels. If the adjacent pixel difference is not greater than the noise threshold ($\text{TH}_{Noise}$), it is ignored (This is similar to "coring" in a camera aperture signal).

2. VarNumTrans - The variance of the spacing of the zero crossings of the difference signal. This statistic is calculated to avoid misreading bursts of constant frequency. For example, a constant frequency of 3 pixels/cycle which has no registration error may result in an error of 3 pixels when measured because of the repetitive pattern. Measuring VarNumTrans gives a measure of the amount of variation in the spacing of the zero crossings.

3. MaxDiff - The magnitude of the maximum difference between any two horizontally adjacent pixels in the sample range. This is compared to two thresholds; $\text{TH}_{MaxDiff}$ and $\text{TH}_{MaxDiff\_One}$. The first threshold is used when the number of transitions is high, and the latter is used when the number of transitions is exactly one. If MaxDiff is large enough, a "good' edge is likely to be contained in the sample region.

4. Variance - The variance of the sample set. This is given by equations 1 and 2 above. If this value is greater than a variance threshold value, $\text{TH}_V$, and all other conditions, are met then a measurement can be made on this sample set.

At step 716 of the process shown in Figure 7, these statistics are calculated for the sample set. At steps 716 and 718, the calculated statistics are compared to a set of thresholds to determine if the edge in the sample set can be classified as a type 1 or a type 2 edge. If the sample passes either test, then a measurement is made at that location.

If all three of the following conditions are met,

1. (MaxDiff > $\text{TH}_{MaxDiff}$) OR (Variance > $\text{TH}_V$)

2. NumTransitions > =TH$_{NumTrans}$
3. VarNumTrans > TH$_{VarNumTrans}$

then, at step 716, the sample is classified as Type 1 and is considered a "good" measurement point. If the edge is not Type 1, then, at step 718, the Type 2 test is tried.

The Type 2 test is passed if both of these conditions are met:

1. MaxDiff> TH$_{MaxDiff\_One}$
2. NumTransitions = 1

If the Type 1 or Type 2 test is passed at step 714 or step 716 and, at step 720, the sample set has been analyzed at both stating points, then, at step 726 the process determines whether the entry for the current zone in the tally RAM should be reset and passes the red and green pixels to the measurement process. Otherwise, at step 724, the process discards the measurement sample and a new location (e.g. the next entry in the video RAM) is examined.

In general the type 1 edges are more common in camera registration patterns and other charts. The type 1 statistics indicate a large number of transitions of varying frequency together with a large amplitude step or AC component. Type 2 edges are found more in general scenes having a single large transition inside the sample range.

To increase the robustness of the search algorithm and to place single edges in the center of the sample range (instead of near the edge), a "good" location is measured two times. When a sample is found to be OK after on the first pass of all the above tests, step 720 of Figure 7 is executed and control is passed to step 722 which shifts the sample region (i.e., 16 pixels) forward by one-half the sample range (i.e., 8 pixels) and repeats the location test (steps 712, 714, 716 and 718) with this 8 pixel shift. Only if the sample region is passes the type 1 or type 2 test on both on the first pass and the second pass, is the overall sample considered a good candidate to measure. The measurement procedure is then carried out using the shifted sample.

The two-pass method places samples with only a single edge or impulse in the center of the correlation window and provides a more accurate reading than a single pass method. In addition, if the original unshifted sample is a marginal candidate for measurement, the second pass may eliminate the region as a good sample. In other words, if the first 16 sample region is acceptable but the second sample region, starting 8 samples later is not acceptable, than the entire sample set is probably not a good candidate to provide a registration error or LCA measurement.

The edge error in the sample set is measured by the process shown in Figure 7 at step 728. In the measurement process, the difference between the edges in the two different color signals (i.e. G and R or G and B) is determined by correlating the samples of the G color video signal with the samples of the R or B color signals.

Two different correlation techniques may be used to measure the displacement between edges in the two color signals. The first technique is a classical cross correlation of the R and G or B pixel values over the sample range. This method produces good results but has relatively large computing requirements involved in calculating the cross correlation function. The second technique uses the sum of the absolute difference between the pixels of the two colors and changes the correspondence between pixels by "sliding" one sample set across the other sample set. The sum of absolute difference of the two sample sets is recorded for each different pixel correspondence. The two approaches result in different measurement accuracy and different computational complexity.

The first approach is the basic cross correlation R($x,d$) of the two color signals over the sample region. This is calculated using equation (8).

$$R(x,d)= \frac{\displaystyle\sum_{i=0}^{n-1} R(x + i + d) \cdot G(x + i)}{\sqrt{\text{var}iance_{red}} \cdot \sqrt{\text{var}iance_{green}}} \tag{8}$$

where $x$ is the pixel column, $d$ is displacement error at $x$, and $r(x)$ and $g(x)$ are the red and green pixel values with the means removed as shown in equations (9) and (10).

$$r(x) = R(x) - \frac{\displaystyle\sum_{i=0}^{N-1} R(x + i)}{N} \tag{9}$$

$$g(x) = G(x) - \frac{\sum_{i=0}^{N-1} G(x + 1)}{N} \qquad (10)$$

The error measurement is indicated by the displacement (d). The displacement which produces the maximum value of R(x,d) over the sample range is the measured error to the nearest image pixel.

Although the cross correlation is very accurate, the number of multiplications required in the calculation is $m$ where m is given by equation (11).

$$m = N \times (2 \times maxerror+1) \qquad (11)$$

Thus, to measure over a range of ±3 pixels with a 16 pixel measurement sample requires 112 multiplications.

The second technique simplifies the calculations used to determine the displacement that produces the best match between the two color signals. This approach calculates a sum of the magnitude of the differences between the pixels of the two color signals as the displacement between the two sample sets is increased. This technique is computationally simpler than the cross correlation technique and the inventors have determined that it is almost as accurate. Before calculating the difference function Diff(x,d), as shown below in equation (12), the samples of the R and G color signals are first normalized over the sample range. This is done by finding the minimum and maximum sample value of each color signal sample set and multiplying the R samples by a factor such that the maximum and minimum samples of the R signal are the same as the respective maximum and minimum sample of the G signal.

$$\text{Diff}(x,d) = \sum_{i=0}^{N-1} |R(x +i +d) - G(x+i)| \qquad (12)$$

The nearest pixel error d is determined when Diff($x,d$) reaches its minimum value over the displacement range $\pm d$ region.

This technique requires only adders, but not multipliers, so it is much simpler to calculate than the cross correlation technique.

While the sum of difference technique may not be as accurate as the cross correlation technique in some cases, the inventors have determined that the difference in accuracy is not significant when a number of measurement points in a number of sample sets are averaged together.

To reduce the number of calculations in the measurement process, the correlation is done in two stages. The first stage makes a coarse measurement of the error to the nearest pixel. The second stage, which is a fine measurement stage, measures subpixel accuracy immediately around the displacement error identified by the first stage. The advantage of the two step approach is that it reduces the number of measurements, because the fine measurement only needs to be made in neighborhood around the pixel position identified in the first stage.

The first stage simply uses either of the previously mentioned correlation functions to obtain the displacement error $d$ to nearest pixel position accuracy.

Two different methods may be used for the fine measurement stage: (1) a multiphase finite impulse response (FIR) filter technique, or (2) a parabolic fit to locate the peak of the function R(x,d), the first stage error function. The first method uses interpolation and a repeat of the classical correlation function, but at a higher spatial resolution. The second approach fits a parabolic function to the three best correlation points produced by the first stage.

The first method uses a FIR filter to interpolate the reference waveform to the desired subpixel accuracy using polyphase interpolation filters. For example, for measurement to the nearest 1/4 pixel, the reference image is upsampled 4 to 1 using 4 interpolation filters. The interpolation is done in the reference waveform over a range w pixels, where w is given by equation (13).

$$w=N+2(1+\text{number of taps in the interpolation filter}) \qquad (13)$$

In the exemplary embodiment of the invention, N is 16.

The fine correlation summation is calculated once for each sub-pixel displacement between the result of the first stage and the adjacent pixel on each side of it (e.g., 7 sub-pixels for 1/4 pixel measurements).

The second fine measurement approach assumes that the peak of the correlation function is parabolic in shape and the peak point can be estimated by fitting a quadratic curve to the function defined by three points. The three points correspond to the value of the function Diff (x,d) for the displacement value, d, which produced the best match between the two sample sets and the value of the function for displacement values one less and one greater than d.

Assuming that R0 = Diff (x, d-1), R1 = Diff (x, d) and R2 = Diff (x, d + 1), the fine displacement error peak point, $\Delta$, is determined from R0, R1, and R2 as shown in equation (14).

$$\Delta = \frac{R0 - R2}{2(R2 + R0) - 4R1} \tag{14}$$

The resulting $\Delta$ is then rounded to desired accuracy (e.g. to the nearest 1/4 pixel) and added to or subtracted from the coarse displacement (the value of d at R0) from the first stage to give the final error measurement. The value $\Delta$ is added to d if R2 represents a better match than R0 and subtracted from d if R0 represents a better match than R2 as shown by equation (15).

$$E = d + \Delta | R0 \leq R2 \tag{15}$$

$$E = d - \Delta | R0 > R2$$

Table 1 shows exemplary threshold settings which produce acceptable results. The maximum range of horizontal errors was assumed to be ±6 pixels and the number of pixels per sample region was 16. Image pixels are represented as eight-bit values having a range of 0 to 255.

TABLE 1

| Threshold Settings | |
|---|---|
| **Parameter** | **Value** |
| $TH_{CM}$ | 12 |
| $TH_{CV}$ | 8 |
| $TH_{HV}$ | 0.75 |
| $TH_{Noise}$ | 8 |
| $TH_{MaxDiff}$ | 18 |
| $TH_{MaxDiff\ One}$ | 25 |
| $TH_{V}$ | 10 |
| $TH_{NumTrans}$ | 1 |
| $TH_{VarNumTrans}$ | 0.5 |

While the invention has been described in terms of exemplary embodiments, it is contemplated that it may be practiced with modifications within the scope of the following claims.

## Claims

1. A method for measuring registration errors and chromatic aberration in video signals, said video signals being represented as least first and second color signals and said registration errors and chromatic aberration appearing as misaligned edges of the first and second color signals in an image reproduced from the video signals, the method comprising the steps of:

   a) selecting a first set of N samples of the first color signal and a second set of N samples of the second color signal, where N is an integer greater than 2;
   b) analyzing the set of samples of the first color signal to determine whether the first set of samples contains M samples representing an edge in the image, where M is an integer less than N, and storing the first and second sets of samples if the first set of samples is determined to contain the M samples representing the edge; and
   c) comparing the stored first set of samples to the stored second set of samples to determine a displacement between the M samples in the first set of samples with M corresponding samples in the second set of samples.

2. A method according to claim 1, wherein step a) further includes the steps of:

calculating a measure of color balance between the first set of samples and the second set of samples; and

discarding the first and second sets of samples if the measure of color balance has a value which is not within a predetermined range.

3. A method according to claim 2, wherein the first and second sets of samples represent image picture elements (pixels) in a line of the image and step a) further includes the steps of:

selecting third and fourth sets of samples of said first color signal, each of the samples in the third and fourth sets of samples corresponding to a pixel which is immediately adjacent to a respective pixel element in said first set of samples;

analyzing the first, third and fourth sets of samples to determine whether the first set of samples is adjacent to an edge which is parallel to the line of the image or represent an edge which intersects the line of the image on a diagonal; and

discarding the first, second, third and fourth sets of samples if the first set of samples is adjacent to the parallel edge or represents the diagonal edge.

4. A method according to claim 1, wherein M equals 2 and step b) includes the steps of:

calculating difference values between successive ones of the samples in the first set of samples;

comparing each of the calculated difference values to an edge threshold value; and

indicating that the set of samples represents an edge if any of the calculated difference values is greater than the edge threshold value.

5. A method according to claim 1, wherein step c) includes the steps of:

performing a cross correlation between the stored first set of samples and the stored second set of samples to identify a coarse displacement between respective edges in the first and second sets of samples to a nearest intersample distance;

selecting the M samples from the stored first set of samples and M corresponding samples from the stored second set of samples, wherein each of the samples from the second set is displaced by the identified displacement from the respective sample in the first set;

interpolating S samples between successive ones of the M samples of each of the first and second sets of samples, where S is an integer;

performing a cross correlation between the respective M original and interpolated samples of the first and second sets of samples to identify a fine displacement between the first and second sets of samples which is less than one intersample distance of the original samples from a central sample of the M samples of the first set of samples; and

combining the coarse displacement and the fine displacement to obtain the measure of the registration errors and chromatic aberration errors in the video signals.

6. A method according to claim 1, wherein step c) includes the steps of:

performing a cross correlation between the stored first set of samples and the stored second set of samples to identify a coarse displacement between respective edges in the first and second sets of samples to a nearest intersample distance and storing a correlation value at each displacement considered in the cross correlation;

selecting at least three of the stored correlation values including the correlation value corresponding to the identified displacement;

fitting a parabolic curve to the selected correlation values;

determining a maximum point of the parabolic curve as a fine displacement; and

combining the coarse displacement and the fine displacement to obtain the measure of the registration errors and chromatic aberration errors in the video signals.

7. A method according to claim 1, wherein step c) includes the steps of:

generating respective measures of sum of absolute difference between the M samples of the first stored set of samples and M samples of the second stored set of samples for respectively different displacements between the first stored set of samples and the second stored set of samples;

identifying a coarse displacement as the sum of absolute difference measures which is less than or equal to any other one of the sum of absolute difference measures;

selecting the M samples from the stored first set of samples and M corresponding samples from the stored second set of samples, wherein each of the samples from the second set is displaced by the coarse displacement from the respective sample in the first set;

interpolating S samples between successive ones of the M samples of each of the first and second sets of samples, where S is an integer;

performing a cross correlation between the respective M original and S interpolated samples of the first and second sets of samples to identify a fine displacement between the first and second sets of samples which is less than one intersample distance of the original samples from a central sample of the M samples of the first set of samples; and

combining the coarse displacement and the fine displacement to obtain the measure of the registration errors and chromatic aberration errors in the video signals.

8. A method according to claim 1, wherein step c) includes the steps of:

generating respective measures of sum of absolute difference between the M samples of the first stored set of samples and M samples of the second stored set of samples for respectively different displacements between the first stored set of samples and the second stored set of samples;

identifying a coarse displacement as the sum of absolute difference measures which is less than or equal to any other one of the sum of absolute difference measures;

selecting at least three of the measures of sum of absolute difference including the measure corresponding to the coarse displacement;

fitting a parabolic curve to the selected measures;

determining a minimum point of the parabolic curve as a fractional intersample distance to be combined with the identified displacement to produce the measured displacement value.

9. Apparatus for measuring registration errors and chromatic aberration in video signals, said video signals being represented as least first and second color signals and said registration errors and chromatic aberration appearing as misaligned edges of the first and second color signals in an image reproduced from the video signals, the method comprising:

means for selecting a first set of N samples of the first color signal and a second set of N samples of the second color signal, where N is an integer greater than 2;

a video memory;

means for analyzing the set of samples of the first color signal to determine whether the first set of samples contains M samples representing an edge in the image, where M is an integer less than N, and storing the first and second sets of samples in the video memory if the first set of samples is determined to contain the M samples representing the edge; and

means for comparing the stored first set of samples to the stored second set of samples to determine a displacement between the M samples in the first set of samples with M corresponding samples in the second set of samples.

10. Apparatus according to claim 9, wherein the means for selecting further includes:

means for calculating a measure of color balance between the first set of samples and the second set of samples; and

means for inhibiting the storage of the first and second sets of samples into the memory if the measure of color balance has a value which is not within a predetermined range.

11. Apparatus according to 10, wherein the first and second sets of samples represent image picture elements (pixels) in a line of the image and the means for selecting further includes:

means for selecting third and fourth sets of samples of said first color signal, each of the samples in the third and fourth sets of samples corresponding to a pixel which is immediately adjacent to a respective pixel element in said first set of samples;

means for analyzing the first, third and fourth sets of samples to determine whether the first set of samples is adjacent to an edge which is parallel to the line of the image or represent an edge which intersects the line of the image on a diagonal; and

means for inhibiting the storage of the first and second sets of samples if the first set of samples is determined to be adjacent to the parallel edge or represents the diagonal edge.

**12.** Apparatus according to claim 9, wherein M equals 2 and the means for analyzing includes:

means for calculating difference values between successive ones of the samples in the first set of samples;
means for comparing each of the calculated difference values to an edge threshold value to indicate that the set of samples represents an edge if any of the calculated difference values is greater than the edge threshold value.

**13.** A method according to claim 9, wherein the means for comparing includes:

first correlation means for performing a cross correlation between the stored first set of samples and the stored second set of samples to identify a coarse displacement between respective edges in the first and second sets of samples to a nearest intersample distance;
means for selecting the M samples from the stored first set of samples and M corresponding samples from the stored second set of samples, wherein each of the samples from the second set is displaced by the identified displacement from the respective sample in the first set;
means for interpolating S samples between successive ones of the M samples of each of the first and second sets of samples, where S is an integer;
second correlation means for performing a cross correlation between the respective M original and S interpolated samples of the first and second sets of samples to identify a fine displacement between the first and second sets of samples which is less than one intersample distance of the original samples from a central sample of the M samples of the first set of samples; and
means for combining the coarse displacement and the fine displacement to obtain the measure of the registration errors and chromatic aberration errors in the video signals.

**14.** Apparatus according to claim 9, wherein the means for comparing includes:

means for performing a cross correlation between the stored first set of samples and the stored second set of samples to identify a coarse displacement between respective edges in the first and second sets of samples to a nearest intersample distance and storing a correlation value at each displacement considered in the cross correlation;
means for selecting at least three of the stored correlation values including the correlation value corresponding to the identified displacement;
means for fitting a parabolic curve to the selected correlation values;
means for determining a maximum point of the parabolic curve as a fine displacement; and
means for combining the coarse displacement and the fine displacement to obtain the measure of the registration errors and chromatic aberration errors in the video signals.

**15.** Apparatus according to claim 9, wherein the means for comparing includes:

means for generating respective measures of sum of absolute difference between the M samples of the first stored set of samples and M samples of the second stored set of samples for respectively different displacements between the first stored set of samples and the second stored set of samples;
means for identifying a coarse displacement as the sum of absolute difference measures which is less than or equal to any other one of the sum of absolute difference measures;
means for selecting the M samples from the stored first set of samples and M corresponding samples from the stored second set of samples, wherein each of the samples from the second set is displaced by the coarse displacement from the respective sample in the first set;
means for interpolating S samples between successive ones of the M samples of each of the first and second sets of samples, where S is an integer;
means for performing a cross correlation between the M original and S interpolated samples of the first and second sets of samples, respectively, to identify a fine displacement between the first and second sets of samples which is less than one intersample distance of the original samples from a central sample of the M samples of the first set of samples; and
means for combining the coarse displacement and the fine displacement to obtain the measure of the registration errors and chromatic aberration errors in the video signals.

**16.** Apparatus according to claim 9, wherein the means for comparing includes:

means for generating respective measures of sum of absolute difference between the M samples of the first stored set of samples and M samples of the second stored set of samples for respectively different displacements between the first stored set of samples and the second stored set of samples;

means for identifying a coarse displacement as the sum of absolute difference measures which is less than or equal to any other one of the sum of absolute difference measures;

means for selecting at least three of the measures of sum of absolute difference including the measure corresponding to the coarse displacement;

means for fitting a parabolic curve to the selected measures;

means for determining a minimum point of the parabolic curve as a fractional intersample distance to be combined with the identified displacement to produce the measured displacement value.

FIG 1

MAX EDGE

F.IG 3A

FIG 2

FIG 3

Fig. 4

z0  z1  z2                                      z31

z32

z64

z96

z128

z160

z192

z224

FIG 5                                           z255

TAG                    31 PIXELS

FIG 6

31
Take in 16 samples of red
and green at pixel column X ———710

Color Test OK ——712
no

yes

Vertical Edge Test OK ——714
no

yes

Type 1 Edge Test ——716
no

yes

Type 2 Edge Test ——718
no

yes

Shift 8 Samples
X'=X+8
Do 2nd Pass ——722

no
Is This 2ND Pass? ——720

yes

Location Passed (OK)
Continue on to
Measurement Procedure;
CHECK TALLY RAM ——726

Location Failed
Search Next Area; ——724

Measure at location X' ——728

FIG 7

Sample Set 1    Sample Set 2

S1 S2                                    S3

S0

C

FIG 8

22